## Europäisches Patentamt

## European Patent Office

## Office européen des brevets

(19)

(11) Veröffentlichungsnummer: **0 145 020**

**B1**

(12) **EUROPÄISCHE PATENTSCHRIFT**

(45) Veröffentlichungstag der Patentschrift:
06.03.89

(51) Int. Cl.⁴: **F 16 L 51/00**

(21) Anmeldenummer: **84115295.2**

(22) Anmeldetag: **12.12.84**

(54) Kompensator für Leitungen oder dergleichen, die heisse Abgase führen.

(30) Priorität: **14.12.83  DE 3345179**

(43) Veröffentlichungstag der Anmeldung:
**19.06.85 Patentblatt 85/25**

(45) Bekanntmachung des Hinweises auf die Patenterteilung:
**06.03.89 Patentblatt 89/10**

(84) Benannte Vertragsstaaten:
**AT BE CH DE FR GB IT LI LU NL SE**

(56) Entgegenhaltungen:
**FR-A-2 266 095**
**FR-A-2 285 568**
**US-A-3 197 850**
**US-A-3 874 711**

(73) Patentinhaber: **Schlauch- Handels- Produktions GmbH, Zeiss- Strasse 5, D-2401 Ratekau (DE)**

(72) Erfinder: **Fähnrich, Eckhard, Bäderstrasse 47a, D-2401 Ratekau (DE)**
Erfinder: **Duchowicz, Zbigniew, Restormel Vicarage Road, East Sheen London SW14 (GB)**

(74) Vertreter: **Wilcken, Thomas, Dipl.- Ing., Musterbahn 1, D-2400 Lübeck (DE)**

EP 0 145 020 B1

**Beschreibung**

Die Erfindung betrifft einen Kompensator für heiße Abgase führende Leitungen oder Anschlußstutzen, bestehend aus einem wenigstens biegsamen und gasdichten Rohrkörper aus hitzebeständigem Material, der zum Überbrücken von zwei sich mit Abstand gegenüberstehenden Leitungsenden bzw. Stutzen bestimmt ist und Schwingungen der Leitungen bzw. Stutzen durch Dämpfung kompensiert. Ein derartiger Kompensator ist z. B. aus FR-A-2 266 095 oder FR-A-2 285 568 bekannt.

Es ist auch bekannt, beim Abführen von heißen Abgasen ein kürzeres oder längeres Stück eines Metallgliederschlauches oder eines metallenen Wellschlauches zu verwenden, das an zwei voneinander beabstandeten Anschlußstutzen oder Enden von Abgas führenden Leitungen befestigt wird. Derartige Überbrückungsstücke können zwar relativ hohe Temperaturen aushalten, jedoch wird es gewünscht, daß auch Temperaturen von über 1000°C ausgehalten werden können. Auch wird es gewünscht, daß die Vibrationsdämpfungseigenschaften verbessert sind, so daß z. B. die Vibrationen bei Brennkraftmaschinen nur stark gedämpft auf das weiterführende Abgasrohrleitungssystem gelangen. Ferner neigen die bekannten Kompensatoren bei hoher Beanspruchung nach relativ kurzer Benutzungsdauer zum Brechen. Ein weiterer Nachteil besteht darin, daß die im wesentlichen aus Metall bestehenden Kompensatoren selbst eine gute Temperaturleitfähigkeit aufweisen, so daß sie hohe Temperaturen weiterleiten können. Schließlich ist der vorbekannte Kompensator, insbesondere wenn er bei Abgasen mit höherer Temperatur verwendet wird und demgemäß aus einem Metallgliederschlauchstück besteht, nicht gasdicht, so daß unter einem höheren Druck stehende Abgase durch die Wände des Kompensators in die Umgebung entweichen können.

Die Aufgabe der Erfindung besteht somit in der Schaffung eines wenigstens biegsamen Kompensators der einleitend angeführten Art, der feuerfest sowie gasdicht ist sowie verbesserte Vibrations- und Schalldämpfungseigenschaften aufweist.

Die Lösung dieser Aufgabe kennzeichnet sich dadurch, daß der gasdicht ausgebildete Rohrkörper einen inneren Schlauch aus Silikatgewebe aufweist, der von mindestens einem weiteren Schlauch aus hitzebeständigem Gewebe koaxial umgeben ist, daß eine gegenüber der Gasströmung in dem Rohrkörper durch wenigstens einen der Schläuche abgeschirmte Metallstütze den Querschnitt des Schlauchaufbaues stabilisiert und daß die Schläuche zumindest an ihren Endbereichen mit einem Metalldraht miteinander vernäht sind.

Ein erfindungsgemäßer Kompensator erfüllt die Eigenschaften, daß er sehr hohe Temperaturen, z. B. bis etwa 1500°C, aushält und dabei auch bei höheren Abgasdrücken gasdicht ist. Ferner weist der Kompensator sehr gute Vibrations- und Schalldämpfungseigenschaften auf, was auf die Verwendung und den Schichtaufbau seiner gewebemäßigen Schläuche zurückzuführen ist. Obwohl die Gewebehüllen des Kompensators aus Kunststoffmaterial bestehen, setzen sich beim Strömen der Abgase durch den Kompensator von diesem keine umweltbelastenden Schadstoffe ab, da das Silikatgewebe des Kompensators asbestfrei ist. Weiterhin ist der Kompensator leicht im Gewicht und zumindest biegsam, so daß ein Axialversatz bei z. B. zu verbindenden Leitungsenden kein Montagehindernis darstellt. Schließlich besitzt der erfindungsgemäse Kompensator eine geringe Temperaturleitfähigkeit, so daß er als Temperaturausbreitungsbremse wirkt.

Eine besondere Ausgestaltung der Erfindung besteht darin, daß zumindest zwischen zwei benachbarten Schläuchen eine ein- oder mehrlagige Metallfolie als Gasdiffusionssperre vorgesehen ist. Diese Ausgestaltung gestattet die Ausbildung einer besonders hochwirksamen Gasdiffusionssperre.

Die Erfindung ist nachstehend anhand zweier in den anliegenden Zeichnungen dargestellter Ausführungsbeispiele näher erläutert.

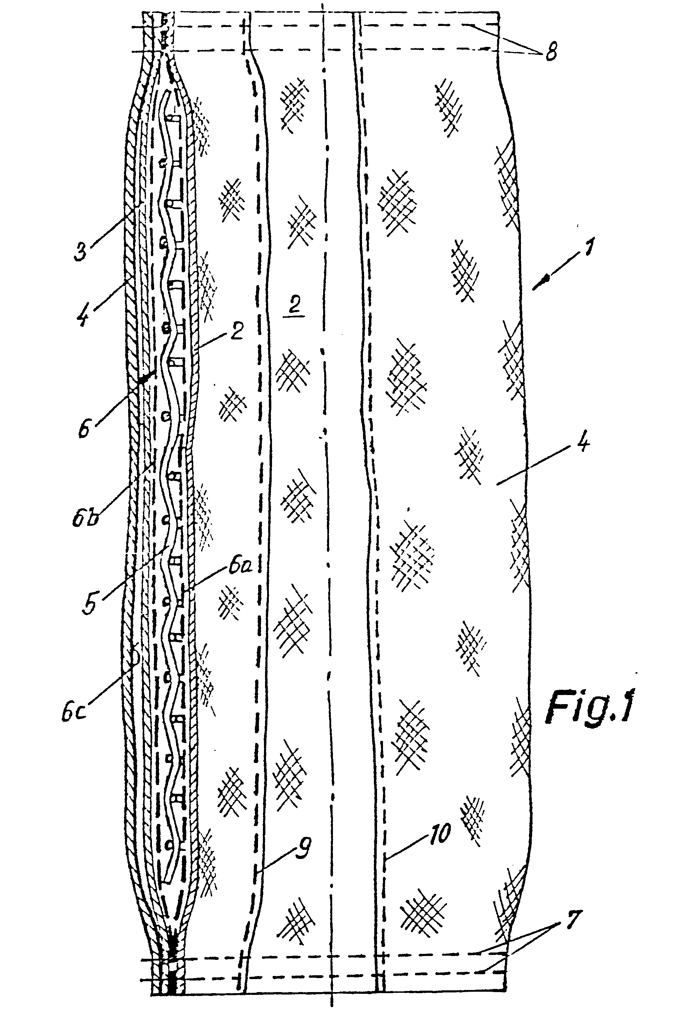

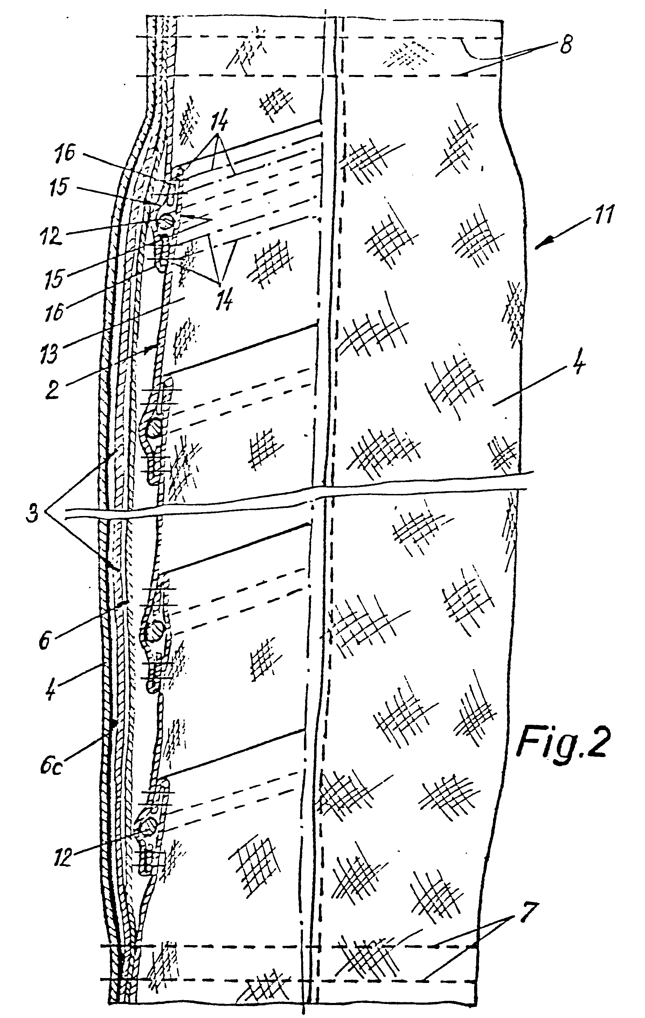

Die beiden Ausführungsbeispiele sind in den Figuren 1 und 2 jeweils im axialen Halbschnitt gezeigt.

Figur 1 zeigt die erste Ausführungsform eines Kompensators 1 in Form eines Rohrkörpers, der z. B. im allgemeinen eine Länge von etwa 10 bis 30 cm aufweist, jedoch auch noch länger ausgebildet sein kann. Der Kompensator besteht aus einem inneren Schlauch 2 aus Silikatgewebe und aus mindestens einem weiteren Schlauch 3 aus hitzebeständigem Gewebe, das den inneren Schlauch 2 koaxial umgibt. Im dargestellten Fall ist noch ein weiterer Schlauch 4 aus hitzebeständigem Material vorgesehen, der den Schlauch 3 außen umgibt, wobei die Schläuche 3 und 4 bevorzugt ebenfalls aus Silikatgewebe bestehen, was jedoch nicht unbedingt erforderlich ist. Ferner ist eine Metallstütze 5 vorgesehen, die in diesem Fall aus einem flexiblen Metalldrahtnetz besteht, das zu einem Rohrkörper geformt ist. Diese Metallstütze sichert, daß die Querschnittform des Kompensators 1 erhalten bleibt, was insbesondere während der Benutzung des Kompensators wichtig ist. Des weiteren ist eine hüllenförmige Gasdiffusionssperre 6 vorgesehen, die im dargestellten Fall aus einer zweilagigen Metallfolie besteht, wobei die eine hüllenförmig geformte Metallfolie 6a zwischen dem inneren Schlauch 2 und der Metallstütze 5 und die andere hüllenförmig geformte Metallfolie 6b zwischen der Metallstütze und dem weiteren Schlauch 3 vorgesehen ist. Die Metallfolien können z. B. aus Aluminiumfolie bestehen und sind im dargestellten Fall als gesonderte Einlagen verwendet. Es kann jedoch auch so vorgegangen werden, daß die Schläuche 2, 3 und 4 bereits auf den entsprechenden Seiten mit einer als Gasdiffusionssperre dienenden Beschichtung versehen sind. Dies ist z. B. bei dem äußeren Schlauch 4 dargestellt, bei dem die gasdichte bzw. diffusionsdichte Beschichtung 6c durch einen dickeren und durchgehenden Strich kenntlich gemacht ist. Es sei noch angemerkt, daß der äußere Schlauch 4 jedoch auch ohne Diffusionssperrschicht verwendet werden kann.

In alternativer Ausführungsform der Gasdiffusionssperre 6 kann jedoch auch so vorgegangen werden, daß das Silikatgewebe der Schläuche 2, 3 und 4 so dicht gewebt ist, daß eine gesonderte Gasdiffusionssperre nicht erforderlich ist. Die dichte Webart des Silikatgewebes in Verbindung mit der Tatsache, daß mehrere Schläuche zur Ausbildung des Kompensators herangezogen werden, kann in einigen Anwendungsfällen als Diffusionssperre ausreichen, insbesondere dann, wenn die Abgasdrücke der heißen Abgase, die den Kompensator durchströmen, nur einen geringeren Wert über dem Atmosphärendruck aufweisen. Hierbei kann es unter Umständen ausreichen, daß nur einer der Schläuche gasdicht gewebt ist.

Die Enden der Schläuche einschließlich der evtl. gesondert vorgesehenen Gasdiffusionssperre 6 sind miteinander vernäht, was durch die schematisch gezeigten Nähte 7 und 8 dargestellt ist. Je nach Anwendungsfall können diese Nähte aus einer Einfachnaht oder aus einer Mehrfachnaht, wie schematisch gezeigt, bestehen. Als Nahtmaterial wird ein Metalldraht verwendet, der zu seiner besseren Handhabung und aus optischen Gründen des Kompensators vorteilhaft mit einem Textilmaterial ummantelt ist.

Um das Silikatgewebematerial für die Schläuche 2, 3 und 4 zu Rohrkörpern bzw. rohrförmigen Hüllen ausbilden zu können, sind die entsprechend zugeschnittenen Silikatgewebebahnen längsvernäht, wie es mit den gestrichelt angegebenen Nähten 9 und 10 kenntlich gemacht ist. Das Vorsehen von Längsnähten sichert, daß die Gasdiffusionssperre nur um einen Minimalwert durchstochen wird. Die genähten Schläuche 2, 3 und 4 werden vorteilhaft gewendet, so daß die Nähte 9, 10 usw. auf der jeweiligen Innenseite des betreffenden Schlauches zu liegen kommen. In dieser Form werden die Schläuche dann zusammen mit dem rohrförmigen, stützenden Metalldrahtgewebe 5 sowie mit den ggf. gesondert vorgesehenen Metallfolien 6a, 6b koaxial montiert und gemäß den Nähten 7 und 8 an den Enden miteinander vernäht.

Die weitere Ausführungsform gemäß Figur 2 zeigt einen Kompensator 11, der vorzugsweise als längerer Schlauch ausgebildet ist. Dieser Kompensator unterscheidet sich im wesentlichen dadurch von dem Kompensator 1, daß er als Metallstütze eine Metallwendel 12 aufweist, die vorzugsweise aus einem Metalldraht besteht. Der weitere Unterschied besteht darin, daß diese Metallwendel in eine gewendelte Gewebebahn 13 eingenäht ist, so daß diese Gewebebahn den inneren Schlauch des Kompensators bildet, der der Gasströmung ausgesetzt ist. Wie es aus Figur 2 hervorgeht, überlappen sich die Randbereiche 15 der gewendelten Gewebebahn mit einer solchen Breite, daß in dem Überlappungsbereich die Drahtwendel 12 eingenäht ist. Um eine sichere Vernähung der Randbereiche miteinander zu gewährleisten, sind beiderseits der Metallwendel 12 vorzugsweise Doppelnähte 14 vorgesehen, die strichpunktiert dargestellt sind. Der besseren Übersicht wegen, sind diese Nähte 14 in Figur 2 nur oben gezeigt und an den übrigen Stellen weggelassen. Auch in diesem Fall wird wieder ein Metallfaden verwendet, der mit einem Textilmaterial ummantelt ist. Es ist dabei unerheblich, daß das Textilmaterial des Metallfadens bei der späteren Benutzung des Kompensators verbrennt, da lediglich gesichert sein muß, daß eine haltbare Naht gegeben ist.

Um zu verhindern, daß der Rand der Randbereiche 15 der gewendelten Gewebebahn 13 beim Betrieb des Kompensators ausfranst, weisen die Randbereiche einen doppellagigen Saum 16 auf, wobei die Nähte so geführt sind, daß sie in den Saum bzw. in den Säumen 16 verlaufen.

Der so aus der Gewebebahn 13 geformte innere Schlauch ist dann von der bereits erwähnten Diffusionssperre 6 koaxial umgeben, wobei die Sperre dann wiederum von dem weiteren Schlauch 3 aus vorzugsweise Silikatgewebe umgeben ist. In weiterer Übereinstimmung mit dem weiter vorstehend geschriebenen Kompensator 1 kann dann der weitere Schlauch 4 mit einer weiteren integrierten Gasdiffusionssperre 6c versehen sein.

Auch bei diesem Beispiel sind die Enden des Kompensators 11 in der schon erwähnten Weise mit den Nähten 7 und 8 vernäht. Während die den inneren Schlauch bildende, gewendelte Gewebebahn 13 zwangsläufig auch wendelförmig vernäht ist, sind die beiden äußeren Schläuche 3 und 4 aus Silikatgewebe mit den bereits erwähnten Längsnähten 9 bzw. 10 versehen.

Alternativ kann es bei gewissen Anwendungsfällen ausreichen, daß jeweils nur der äußere Schlauch 4 längsvernäht ist, während die übrigen durch anders geformte Nähte gebildet sein können. Für die erwähnten Schläuche wird auf jeden Fall asbestfreies Gewebematerial verwendet, wobei es für einige Anwendungsfälle ausreichen kann, daß nur der innere Schlauch aus Silikatgewebe besteht, während die übrigen Schläuche aus einem anderen hitzebeständigen Gewebematerial bestehen können. Während der Kompensator 1 gemäß Figur 1 im wesentlichen nur biegsam ist, weist der andere Kompensator 11 gemäß Figur 2 zusätzlich eine erhebliche Nachgiebigkeit in axialer Richtung auf, was auf die Metallwendel 12 zurückzuführen ist. Der Kompensator 11 nach Figur 2 wird im wesentlichen dann verwendet, wenn der Kompensator größere Abmessungen aufweisen muß als der Kompensator 1 gemäß Figur 1. Der Kompensator 11 kann z. B. einen Durchmesser aufweisen von etwa 100 mm und eine Länge bis zu mehreren Metern, wobei insgesamt auch noch größere Maße möglich sind. Ein weiterer Vorteil insbesondere des Kompensators 11 besteht darin, daß er sich während der Benutzung auf seiner Außenseite allenfalls geringfügig erwärmt, wobei er im allgemeinen nur handwarm wird, so daß er nach Gebrauch ohne besondere Beachtung einer von ihm ausgehenden Brandgefahr gelagert werden kann.

Unter Silikatgewebe ist ein bekanntes Gewebe zu verstehen, dessen Fasern im allgemeinen aus wenigstens etwa 90 % SiO$_2$, bestehen für den inneren Schlauch ist ein solches Gewebe vorzusehen, da dieser den hohen Temperaturen von heißen Abgasen unmittelbar ausgesetzt ist. Für die folgenden Schläuche bzw. deren Gewebe kann auch ein Mischgewebe verwendet werden, das neben Silikatfasern auch andere hochschmelzende Fasern mit geringer Wärmeleitfähigkeit aufweist, die z. B. aus Glasfasern bestehen und beispielsweise für das Gewebe des äußersten Schlauches eingesetzt. werden können.

Schließlich kann beim Kompensator 1 noch ein weiteres Metalldrahtgewebe 5 und/oder auch eine Metallwendel 12 angewendet werden, Wie es auch möglich ist, beim Kompensator 11 zusätzlich ein Drahtgewebe 5 zu verwenden.

**Patentansprüche**

1. Kompensator (1, 11) für heiße Abgase führende Leitungen oder Anschlußstutzen, bestehend aus einem wenigstens biegsamen und fasdichten Rohrkörper aus hitzebeständigem Material, der zum Überbrücken von zwei sich mit Abstand gegenüberstehenden Leitungsenden bzw. Stutzen bestimmt ist und Schwingungen der Leitungen bzw. Stutzen durch Dämpfung kompensiert, dadurch gekennzeichnet, daß der gasdicht ausgebildete Rohrkörper einen inneren Schlauch (2) aus Silikatgewebe aufweist, der von mindestens einem weiteren Schlauch (3) aus hitzebeständigem Gewebe koaxial umgeben ist, daß eine gegenüber der Gasströmung in dem Rohrkörper durch wenigstens einen der Schläuche abgeschirmte Metallstütze (5) den Querschnitt des Schlauchaufbaus stabilisiert und daß die Schläuche (2, 3, 4) zumindest an ihren Endbereichen mit einem Metalldraht miteinander vernäht (7; 8) sind.

2. Kompensator nach Anspruch 1, dadurch gekennzeichnet, daß zumindest zwischen zwei benachbarten Schläuchen (2, 3) eine ein- oder mehrlagige Metallfolie als Gasdiffusionssperre (6) vorgesehen ist.

3. Kompensator nach Anspruch 1, dadurch gekennzeichnet, daß wenigstens einer der Schläuche (2, 3, 4) gasdicht gewebt ist.

4. Kompensator nach Anspruch 1, 2 oder 3, dadurch gekennzeichnet, daß die Metallstütze (5) aus einer Einlage aus einem Metalldrahtgewebe besteht.

5. Kompensator nach einem der Ansprüche 1 bis 4, dadurch gekennzeichnet, daß die Metallstütze aus einer Metallwendel (12) besteht.

6. Kompensator nach Anspruch 5, dadurch gekennzeichnet, daß der innere Schlauch (2) aus einer gewendelten Gewebebahn (13) besteht, deren Randbereiche (15) sich überlappen und im Überlappungsbereich die Metallwendel (12) einschließen sowie beiderseits der Wendel mit einem Metallfaden vernäht (14) sind.

7. Kompensator nach Anspruch 6, dadurch gekennzeichnet, daß die Gewebebahn (13) an ihren beiden Randbereichen (15) einen doppellagigen Saum (16) aufweist und im Saumbereich mit dem Metallfaden vernäht ist.

8. Kompensator nach einem der Ansprüche 1 bis 7, dadurch gekennzeichnet, daß wenigstens der jeweils äußere Schlauch (4) aus einem Gewebezuschnitt besteht, der zu einem Schlauch geformt ist und dessen sich gegenüberliegende Randzonen durch eine Längsnaht (10) miteinander verbunden sind.

9. Kompensator nach einem der Ansprüche 1 bis 8, dadurch gekennzeichnet, daß der als Nähfaden verwendete Metallfaden mit Textilmaterial ummantelt ist.

**Claims**

1. Compensator (1, 11) for pipes or connectors ducting hot waste gases, comprising an at least pliable and gastight tubular element of heat-resistant material which is intended to overbridge the pipe ends or connectors facing each other with mutual spacing and balances oscillations of the pipes or connectors by damping, characterised in that the tubular element of gastight structure has an internal hose (2) of silicate fabric which is co-axially surrounded by at least one further hose (3) of heat-proof fabric, that a metal support (5) screened by at least one of the hoses against the gas flow in the tubular element stabilises the cross-section of the hose structure and that the hoses (2, 3, 4) are sewn together with a metal wire (7; 8) at least in their end regions.

2. Compensator according to claim 1, characterised in that a single or multilayer metal foil is installed as a gas diffusion barrier (6) at least between two adjacent hoses (2, 3).

3. Compensator according to claim 1, characterised in that at least one of the hoses (2, 3, 4) is woven in a gastight manner.

4. Compensator according to claims 1, 2 or 3, characterised in that the metal support (5) comprises an insert of a metal wire mesh.

5. Compensator according to one of the claims 1 to 4, characterised in that the metal support comprises a metal coil (12).

6. Compensator according to claim 5, characterised in that the inner hose (2) is formed by a coiled fabric web (13) the marginal areas (15) of which overlap one another and enclose the metal coil (12) in the area of overlap, as well as being sewn with a metal thread (14) on both sides of the coil.

7. Compensator according to claim 6, characterised in that the fabric web (13) has a twin layer hem (16) along both its edge regions (15) and is sewn with the metal thread in the hem area.

8. Compensator according to one of the claims 1 to 7, characterised in that at least the outermost hose (4) in each case comprises a cut fabric section which is formed into a hose and the mutually opposed edge regions of which are joined together by means of a longitudinal seam (10).

9. Compensator according to one of the claims 1 to 8, characterised in that the metal thread used as a sewing thread is ensheathed in textile material.

**Revendications**

1. Compensateur (1, 11) pour conduites ou tubulures véhiculant des gaz d'échappement chauds, constitué d'un corps tubulaire au moins flexible et étanche aux gaz, réalisé en un matériau résistant à la chaleur qui est déterminé pour ponter deux extrémités de conduite ou deux tubulures situées à un certain intervalle l'une de l'autre et qui compense les oscillations des conduites ou des tubulures par amortissement, caractérisé en ce que le corps tubulaire formé de manière étanche aux gaz présente un tuyau interne (2) fait de tissu silicaté qui est entouré de façon coaxiale d'au moins un autre tuyau (3) fait d'un tissu résistant à la chaleur, en ce qu'un support métallique (5) protégé contre le courant gazeux dans le corps tubulaire par au moins un des tuyaux stabilise la section de la structure de tuyaux et en ce que les tuyaux (2, 3, 4) sont cousus les uns aux autres (7; 8) au moins à leurs extrémités avec un fil métallique.

2. Compensateur selon la revendication 1, caractérisé en ce qu'est prévue au moins entre deux tuyaux voisins (2, 3) une feuille de métal à une ou plusieurs couches comme barrage à la diffusion des gaz (6).

3. Compensateur selon la revendication 1, caractérisé en ce qu'au moins un des tuyaux (2, 3, 4) est tissé de manière étanche aux gaz.

4. Compensateur selon la revendication 1, 2 ou 3, caractérisé en ce que le support métallique (5) se compose d'un insert en tissu de fil métallique.

5. Compensateur selon l'une des revendications 1 à 4, caractérisé en ce que le support métallique se compose d'un enroulement hélicoïdal métallique (12).

6. Compensateur selon la revendication 5, caractérisé en ce que le tuyau interne (2) se compose d'un lé de tissu enroulé en hélice (13), dont les bords (15) se recouvrent et enferment dans la zone de recouvrement l'enroulement métallique (12) et qui sont en outre cousus des deux côtés de l'enroulement avec un fil métallique (14).

7. Compensateur selon la revendication 6, caractérisé en ce que le lé de tissu (13) présente sur ses deux bords (15) un ourlet à double couche (16) et est cousu avec le fil métallique dans la zone de l'ourlet.

8. Compensateur selon l'une des revendications 1 à 7, caractérisé en ce qu'au moins le tuyau externe (4) se compose d'une coupe de tissu qui est formée en un tuyau et dont les zones marginales qui se font face sont liées l'une à l'autre par une couture en long (10).

9. Compensateur selon l'une des revendications 1 à 8, caractérisé en ce que le fil métallique utilisé comme fil de couture est gainé d'une matière textile.

*Fig.1*

*Fig.2*